(19) Europäisches Patentamt
European Patent Office
Office européen des brevets

(11) Numéro de publication: **0 115 230**
**B1**

# (12) FASCICULE DE BREVET EUROPEEN

(45) Date de publication du fascicule du brevet: **01.04.87**

(51) Int. Cl.⁴: **C 09 D 3/81,** B 05 D 5/08

(21) Numéro de dépôt: **83402450.7**

(22) Date de dépôt: **16.12.83**

## (54) Composition de revêtement anti-adhérence et son procédé de préparation.

(30) Priorité: **17.12.82 FR 8221240**

(43) Date de publication de la demande: **08.08.84 Bulletin 84/32**

(45) Mention de la délivrance du brevet: **01.04.87 Bulletin 87/14**

(84) Etats contractants désignés: **AT BE CH DE GB IT LI LU NL SE**

(56) Documents cités:
**FR - A - 2 157 226**
**FR - A - 2 205 912**
**FR - A - 2 445 361**
**FR - A - 2 477 563**
**FR - A - 2 480 772**

(73) Titulaire: **Bourit, Claude Roland, 2 Avenue Robert Schuman, F-86000 Poitiers (FR)**

(72) Inventeur: **Bourit, Claude Roland, 2 Avenue Robert Schuman, F-86000 Poitiers (FR)**

(74) Mandataire: **Moncheny, Michel et al, c/o Cabinet Lavoix 2 Place d'Estienne d'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 115 230 B1

**Description**

La présente invention concerne les revêtements anti-adhérence et anti-salissures. De tels revêtements sont utilisés sur différents supports (béton, pierre, bois, métal, etc.) pour empêcher le collage d'affiches et l'apposition de graffitis ou autres, ou tout au moins faciliter l'enlèvement de ces affiches et le nettoyage de ces graffitis. Ils sont également utilisés pour empêcher la dégradation de bâtiments, par les intempéries.

On connaît déjà de tels produits de revêtement à propriétés d'anti-adhérences contenant une cire synthétique ou naturelle mais qui présentent l'inconvénient d'avoir une mauvaise tenue à la chaleur, compte tenu de la présence de cette cire.

On connaît également des résines siliconées possédant de telles propriétés. Cependant, ces résines ne s'appliquent pas facilement sur tous les supports, elles ont une résistance relativement faible à l'abrasion et une mauvaise tenue dans le temps. D'autres catégories de résines siliconées ne peuvent être appliquées qu'à des températures élevées et ne conviennent donc pas pour les utilisations envisagées ci-dessus.

Dans ces conditions, le but de l'invention est de proposer un produit de revêtement à caractéristiques d'anti-adhérence, qui puisse être appliqué pratiquement comme une peinture traditionelle, qui possède bien entendu de bonnes qualités d'anti-adhérence, qui résiste bien à l'abrasion et qui ait une tenue dans le temps satisfaisante.

Suivant l'invention, une telle substance comprend de 10 à 30% en volume d'une solution de résine organo-silicique méthyle (polyméthylsiloxanne) ayant une teneur en extrait sec supérieure à 70% en poids, de 1 à 6% en volume d'une dispersion d'un élastomère de silicone ayant une teneur en extrait sec supérieure à 60% en poids, de 1 à 3% en volume d'une dispersion ou d'une émulsion de polytétrafluoroéthylène ayant une teneur en extrait sec supérieure à 50% en poids, de 35 à 55% en volume d'un liant acrylique, et de 5 à 25% en volume d'un solvant ou diluant organique, cette composition étant complétée par 5 à 20% en volume d'un catalyseur de polymérisation ou durcisseur.

Suivant d'autres caractéristiques:

- de préférence la composition de ce revêtement est la suivante:

- Résine organo-silicique méthyle en solution: 21 à 25% en volume
- Elastomère de silicone en dispersion: 1,5 à 3% en volume
- PTFE en dispersion ou émulsion: 1,5 à 2,5% en volume
- Liant acrylique: 40 à 46% en volume
- Solvant: 10 à 20% en volume
- Durcisseur: 10 à 17% en volume

Dans la composition définie ci-dessus, la résine organo-silicique méthyle apporte des caractéristiques d'anti-adhérence. Ces résines sont des polymères le plus souvent incomplètement réticulés, dont le squelette est constitué par un réseau tridimensionnel formé par des liaisons:

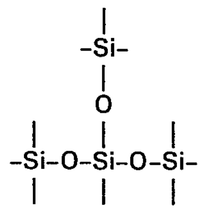

les autres valences des atomes de silicium étant reliées à des radicaux méthyles. Elles sont livrées en solution organique, le solvant de cette résine pouvant être du white-spirit, du butanol, un hydrocarbure aromatique ou aliphatique, de l'acétate d'éthyle, ou un mélange de ces produits.

L'élastomère de silicone a pour effet de provoquer une remontée des silicones vers la surface du produit lorsque ce dernier a été appliqué sur le support et donc d'améliorer l'effet d'anti-adhérence. De plus, il améliore l'accrochage du produit sur ce support et procure une résistance améliorée aux rayonnements ultra violets. Cet élastomère de silicone peut être, par exemple, un élastomère de silicone monocomposant, vulcanisant à la température ambiante, en dispersion dans le cyclohexane.

L'addition de polytétrafluoroéthylène dans des proportions relativement faibles a un double effet: participer à l'anti-adhérence du revêtement et améliorer sa résistance.

Le fait de mélanger ces trois composants à un liant acrylique et à un solvant, dans des proportions choisies en fonction des conditions d'application, permet d'aboutir à un produit présentant les caractéristiques d'une peinture et susceptible par conséquent d'être appliqué par des procédés classiques, notamment au pinceau ou au pistolet. Par ailleurs, le liant peut bien entendu être pigmenté de sorte que le revêtement suivant l'invention peut être disponible dans une gamme de couleurs très étendue.

On va donner ci-dessous un exemple précis de mise en œuvre de l'invention:

- résine organo-silicique méthyle: Rhodorsil 4673 de la Société Rhône Poulenc: 24,5% en volume;
- élastomère de silicone: Rhodorsil dispersion CAF 71528 de la Société Rhône Poulenc: 2% en volume;
- polytétrafluoroéthylène Soreflon ou Algoflon D 60 G de la Société PCUK: 2% en volume.

Ces trois composants sont tout d'abord mélangés puis incorporés à une peinture constituée par un liant acrylique éventuellement pigmenté, par exemple, une peinture Atomurane de la Société Atomlac mélangée à un solvant ou diluant 309 ou 100-309 de la même Société, le liant acrylique représentant 43% en volume, tandis que le solvant représente 14,25% en volume. Ce solvant peut être de type aliphatique, non chloré.

De préférence, immédiatement avant l'utilisation, on incorpore à cette composition 14,25% en volume d'un catalyseur qui peut être, par exemple, le durcisseur Desmodur N 75 A de la Société Bayer, ce durcisseur étant en l'occurence un isocyanate aromatique polyfonctionnel.

Les essais qui ont été effectués avec cette composition démontrent une grande facilité d'application, aussi bien au pinceau qu'au pistolet, d'excellentes qualités d'anti-adhérence et d'anti-salissure, une bonne tenue sur des supports très différents, tels que béton, métal, pierre, bois, verre, etc. et une bonne résistance à l'abrasion ainsi qu'une excellente tenue dans le temps.

Ces essais ont également montré qu'une affiche collée sur ce revêtement se détache rapidement d'elle-même ou sous l'effet des intempéries. Elle peut être décollée à la main. Les inscriptions ou graffitis effectués à la peinture se nettoient très facilement, par simple pulvérisation d'eau sous pression ou faible râclage.

De plus, on constate une adhérence très faible d'autres substances, telles que des hydrocarbures et le goudron.

Ce produit répond donc bien aux diverses conditions fixées dans l'énoncé du problème et peut être utilisé dans de nombreuses applications qui outre les murs de toutes sortes, parois extérieures de bâtiments etc. peuvent également comprendre le revêtement de parois intérieures de bâtiments industriels, de cabines de peintures ou autres.

Bien entendu, un certain nombre de variantes peuvent être apportées dans les compositions indiquées. A titre d'exemple, on peut mentionner qu'il est possible d'ajouter à cette composition un produit siccatif, tel que par exemple, de l'octoate de zinc, dans des proportions de l'ordre de 0,1 à 0,5 et de préférence 0,2 à 0,4% en poids.

**Revendications**

1. Composition de revêtement à propriétés d'anti-adhérence et d'anti-salissures comprenant de 10 à 30% en volume d'une solution de résine organo-silicique méthyle ayant une teneur en extrait sec supérieure à 70% en poids, de 1 à 6% en volume d'une dispersion d'un élastomère de silicone ayant une teneur en extrait sec supérieure à 60% en poids, de 1 à 3% en volume d'une dispersion ou d'une émulsion de polytétrafluoroéthylène ayant une teneur en extrait sec supérieure à 50% en poids, de 35 à 55% en volume d'un liant acrylique et de 5 à 25% en volume d'un solvant ou diluant organique, cette composition étant complétée par 5 à 20% en volume d'un catalyseur de polymérisation ou durcisseur.

2. Composition suivant la revendication 1, caractérisée en ce qu'elle comprend, en % en volume:

- 21 à 25% de résine organo-silicique méthyle en solution;
- 1,5 à 3% d'élastomère de silicone en dispersion;
- 1,5 à 2,5% de PTFE en dispersion ou émulsion;
- 40 à 46% de liant acrylique;
- 10 à 20% de solvant;
- 10 à 17% de durcisseur.

3. Composition suivant la revendication 1 ou la revendication 2, caractérisée en ce qu'elle contient en outre de 0,1 à 0,5% en poids d'un produit siccatif.

4. Procédé de préparation d'une composition suivant l'une quelconque des revendications 1 à 3, caractérisé en ce que l'on mélange la résine organo-silicique méthyle, l'élastomère de silicone et le polytétrafluoroéthylène, dans les proportions convenables, puis on incorpore ce mélange au liant acrylique et au solvant et l'on ajoute en dernier lieu le durcisseur.

**Patentansprüche**

1. Überzugszusammensetzung mit verklebungs- und anschmutzungsabweisenden Eigenschaften mit einem Gehalt von 10 bis 30 Vol.% einer Lösung eines Organomethylsiliciumharzes mit einem Trockengehalt von mehr als 70 Gew.%, 1 bis 6 Vol.% einer Dispersion eines elastomeren Silikons mit einem Trockengehalt von mehr als 60 Gew.%, 1 bis 3 Vol.% einer Dispersion oder einer Emulsion von Polytetrafluoräthylen mit einem Trockengehalt von mehr als 50 Gew.%, 35 bis 55 Vol.% eines acrylischen Bindemittels und 5 bis 25 Vol.% eines organischen Lösungs- oder Verdünnungsmittels, wobei die Zusammensetzung durch 5 bis 20 Vol.% eines Härtungs- oder Polymerisationskatalysators vervollständigt ist.

2. Zusammensetzung nach Anspruch 1, gekennzeichnet durch Volumenprozentgehalt an

- 21–25% eines Organomethylsiliciumharzes in Lösung;
- 1,5 bis 3% eines Silikonelastomeren in Dispersion;
- 1,5 bis 2,5% Polytetrafluoräthylen in Dispersion oder Emulsion;
- 40 bis 46% eines acrylischen Bindemittels;
- 10 bis 20% Lösungsmittel;
- 10 bis 17% Härtungsmittel.

3. Zusammensetzung nach Anspruch 1 oder 2, dadurch gekennzeichnet, dass sie zusätzlich 0,1 bis 0,5 Gew.% eines Trockenmittels (Sikkativ) enthält.

4. Verfahren zur Herstellung einer Zusammensetzung nach einem der vorhergehenden Ansprüche 1 bis 3, dadurch gekennzeichnet, dass man das Organomethylsiliciumharz, das Silikonelastomer und das Polytetrafluoräthylen in den geeigneten Anteilen vermischt, dann die Mischung in das acrylische Bindemittel und Lösungsmittel einbringt und schliesslich das Härtungsmittel zufügt.

**Claims**

1. A covering composition having anti-adherence and anti-soiling properties, comprising 10 to 30% by volume of a solution of methyl organo-silicic resin having a dry extract content exceeding 70% by weight; 1 to 6% by volume of a dispersion of a silicone elastomer having a dry extract content exceeding 60% by weight, 1 to 3% by volume of a dispersion or an emulsion of polytétrafluoro-ethylène having a dry extract content exceeding 50% by weight, 35 to 55% by volume of an acrylic binder and 5 to 25% by volume of an organic solvent or diluent, said composition being completed by 5 to 20% by volume of a polymerization or hardening catalyst.

2. A composition according to claim 1, characterized in that it comprises in % by volume:

- 21 to 25% of a methyl organo-silicic resin in solution;
- 1.5 to 3% of a silicone elastomer in dispersion;
- 1.5 to 2.5% of PTFE in dispersion or emulsion,
- 40 to 46% of an acrylic binder;
- 10 to 20% of a solvent;
- 10 to 17% of a hardener.

3. A composition according to claim1or claim 2, characterized in that if further contains 0.1 to 5% by weight of a siccative product.

4. A process for preparing a composition according to any of the claims 1 to 3, characterized in that the methyl organo-silicic resin, the silicone elastomer and the polytetrafluoro-ethylene are mixed in convenient proportions, and then said mixture is incorporated in the acrylic binder and the solvent, and finally the hardener is added.